# EUROPEAN PATENT APPLICATION

(11) **EP 3 832 096 A1**
(43) Date of publication of application: **09.06.2021**
(21) Application number: 19315156.0
(22) Date of filing: 03.12.2019
(51) Int. Cl.: F02C 7/32, F02C 7/36, F04D 25/06

(54) **ELECTRICAL ASSISTANCE SYSTEM FOR A TURBOMACHINE OF AN AIRCRAFT, METHOD OF OPERATING A TURBOMACHINE OF AN AIRCRAFT, AND AIRCRAFT**

(71) Applicant: Airbus SAS, 31700 Blagnac (FR)
(72) Inventor: Echavarria, Ignacio, 82024 Taufkirchen (DE); Chauvet, Nicolas, 31700 Blagnac (FR); Demelas, Salvatore, 82024 Taufkirchen (DE); Renard, Charles, 31700 Blagnac (FR)
(74) Representative: KASTEL Patentanwälte PartG mbB

(57) **Abstract**

An electrical assistance system for a turbomachine (100) of an aircraft comprises an electrical machine unit (11) for providing and receiving mechanical power to and/or from a shaft (12a, 12b) of a compressor unit (13) of the aircraft, an electrical energy unit (14) for providing and receiving electrical energy, and a power distribution unit (15) for distributing flows of electrical power to the electrical energy unit (14) and to the electrical machine unit (11). The power distribution unit (15) maintains the compressor unit (13) on a stable operating line during operation by controlling the flow of power to and from the electrical machine unit (11). In a standby mode (M1), an energy flow from the electrical machine unit (11) is only used to provide power to the aircraft electrical network. In an acceleration mode (M2), energy flows from an electrical energy storage (14, 16) to the electrical machine unit (11) and from there to the shaft (12a, 12b). In a deceleration mode (M3), energy flows from a decelerated shaft (12a, 12b) to the electrical machine unit (11) and from there to the electrical energy storage (14, 16).

## Description

The invention relates to an electrical assistance system for a turbomachine of an aircraft, a method of operating a turbomachine of an aircraft, and an aircraft.

The operating envelope of gas turbine engines such as turboshaft and turbofan engines are strongly dependent on the flow stability of their compressors. The simplest description of the flow in compressors is usually characterized by two control parameters like corrected massflow and corrected rotational speed, and two resulting variables like the total pressure ratio and the isentropic efficiency. This description is the most common and therefore will be used in this patent application.

The integration of the compressor in the gas turbine brings additional constraints which can be translated in a relationship between rotational speed and massflow. This can be represented in a massflow - total pressure diagram by a line. This line depends on the acceleration of the rotating shaft. In steady operation, this line is called "steady operating line" or loosely "operating line".

Due to flow dynamics, which includes airfoil flow detachment, more generally 3D flow separation on any rotating and static walls, coupling with the boundary conditions, aero-elastic phenomena and thermal dilatation, the stable operation of the compressor is limited to a finite region of the massflow-total pressure space.

One part of this boundary, notably the high pressure part, involves strong unsteady flow fluctuations which can very quickly lead the compressor to its destruction. This boundary in the diagram or massflow-total pressure diagram is usually shortly called "surge line" or "stall line", even if the causes of the instabilities are various.

Although this should not be interpreted as a two-dimensional phenomenon, all these flow instabilities are related to local incidences on each blade profile. Those incidences dramatically change through the operating envelop of the engine and that of the compressor. The aerodynamic design consists in finding the best trade-off between the thermodynamic efficiency on the main operating points corresponding to high power and flow stability at the boundary of the operating envelop.

During accelerations and decelerations, the operating point moves away from the steady operating line, which is called "transient excursion", getting closer to the stability boundaries, corresponding to the highest incidences on the airfoils.

In order to guarantee the stability of the compressor in these conditions and to allow the engine to accelerate according to the specifications, the aerodynamic efficiency is voluntarily degraded on the main operating points. The aerodynamic design is also strongly constrained by vibrational considerations. The overall performances of the compressors are then degraded by design to cope for transient excursions.

Operability constraints in turbomachines have been known and studied for a long time by aerospace industry. In recent years, several hybridisation concepts have been developed trying to downsize the turbomachines (take-off boost) or support the turbomachine in its lowest operating point (idle). However, those applications rely on large energy storage elements capable of providing large amounts of power with an acceptable energy level.

It is the object of the invention to keep the compressor staying on the steady operating line during all its operation.

The object is achieved by an electrical assistance system for a turbomachine of an aircraft, comprising an electrical machine unit for providing and receiving mechanical power to and/or from the shaft of a compressor unit of an aircraft, an electrical energy unit for providing and receiving electrical energy, and a power distribution unit for distributing flows of electrical power to the electrical energy unit and to the electrical machine unit, wherein the power distribution unit is adapted to maintain the compressor unit during operation in a stable operation line by controlling the flow of power to and from the electrical machine unit coupled to the shaft of the compressor unit.

By the invention, an assistance is provided which allows the compressor to stay on the steady operating line during all its operation, in particular within the range of engine deterioration. The assistance is preferably an external assistance.

The electrical assistance system for a turbomachine provided by the invention has in particular the following assets on the performance aspect: It allows the highest aerodynamic performance and hence thermodynamic efficiency on the whole operating range and more specifically on the main operating points. Additionally, it allows a very fast accelerations that could not be reached by classical gas turbines. Further, it allows a buffering of the external offtakes (including bleed, hydraulic and electrical power) via a power off-take energy management concept.

For example, an external source of power, notably electric, could be used to exert an angular moment on the compressor shaft preferably exactly compensating for the desired acceleration.

In the limit of the flow characteristic time, which is several orders of magnitude lesser than the mechanical shaft reaction, the acceleration of such hybrid gas turbine depends only on the power of the electric assistance with respect at the leading order to the inertia of the assisted shaft.

In a multi-shaft gas turbine engine, the stability of the different compressors depends on all the rotational speeds, the ratio of which vary in transient operation because:
(a) the driving high pressure and high temperature flow is firstly expanded in the high-pressure turbine and the remainder is expanded in the lower pressure turbine components (or in an intermediate-pressure turbine in case of a 3-spool engine, and then in the low pressure turbine); and
(b) the high pressure spool has generally a lower inertia than the lower pressure spool or spools.

Electric power can then be used in both ways, as sources or sinks, to produce a driving or a resisting angular moment as required to maintain the operation of the different compressors and fans on their steady operating line.

During the acceleration phase of a gas turbine engine, because of both fuel injection in the combustion chamber and the inertia of the high-pressure spool, the operating point of the high pressure compressor usually migrates toward the surge line. By the invention, this transient excursion away from the operating line can be suppressed by injecting a driving moment exactly compensating for the angular acceleration.

During the deceleration phase on a two-spool gas turbine engine, the operating point of the low pressure compressor or booster usually migrates towards the surge line because its rotational speed decreases more slowly than that of the high pressure compressor. The distance between the operating point and the steady operating line is related to the resisting moment reducing the rotational speed till its steady value. By the invention, this transient excursion can then be removed by applying a resisting moment exactly compensating for the angular deceleration.

Regarding the integration of engine components, the removal of usual devices fitted on gas turbine engines to cope for transient stability concern, e.g. bleed valves, could be envisaged, reducing weight, cost, complexity and maintenance burden.

Further, the functions starter and generator can be mutualised with a motor-generator which may be required by the transient assistance system. In addition, a relaxed usage of such a function can be implemented, allowing in particular a shorter transient excursion away from the steady operating lines, which allows to get the advantages listed above, though in lesser extent at reduced costs for the assistance device.

For example, the use of lightweight electrical machines and e.g. power electronics, advantageously in combination with novel energy sources allowing high power transfers with acceptable energy densities and e.g. high power distribution systems, enable to offset the added complexity and weight of the new system to provide an overall net benefit at aircraft level.

According to a preferred embodiment, the electrical assistance system is adapted for transient optimization during the operation of the turbomachine, wherein the electrical energy unit supports and buffers the transients of the turbomachine.

In this way, high power but less energy than for any steady assistance is required. Hence, less stored energy weight is needed.

In particular, the electrical assistance may be restricted to transient phases.

Another important advantage is that no change in the functional interface with the aircraft is needed. Therefore, on aircraft side, the certification process is not expected to be significantly altered.

The electrical machine unit may comprise at least two electrical machines and the compressor unit may comprise at least two compressors, wherein for example each electrical machine is coupled to at least one of the compressors.

Advantageously, the electrical machine unit may be designed to exert an angular moment on the compressor shaft, e.g. for compensating a desired acceleration by receiving power from the electric energy unit.

The electrical machine unit may be designed to produce a driving and/or a resisting angular momentum as required for example to maintain the operation of the compressor unit and/or different compressors on its steady operating line.

Preferably, the electrical machine unit may be installed or designed to be installed for supporting different compressor stages of the compressor unit.

For example, the electrical machines may be installed to support e.g. any independent compressor stage, in particular high pressure and/or low pressure stages.

Preferably, the electrical machine unit may be adapted to be integrated in one or more shafts of the compressor unit and/or in an accessory gearbox.

Integration of the electrical machines in the compressor shafts is a more optimized integration. Integration in an accessory gearbox may be similar to current electrical starter-generators.

The electrical machine unit may comprise one or more integrated power electronic converters and/or associated controllers. The power electronic converters and associated controllers can be properly allocated with the main options of being e.g. integrated in the e-machines, which means a more optimized integration, integrated in the engine nacelle or in the main fuselage.

The electrical machine unit may comprise one or more electrical machines and associated power electronics which are preferably integrated in the turbomachine.

The electrical energy unit may e.g. be adapted to provide and/or absorb during each transient phase an electrical power of less than 5 MW at its peak.

The electrical energy unit may comprise an electrical energy storage which preferably provides a high power density.

The electrical system is preferably able to provide and absorb during each transient phase with a duration of e.g. 10 to 20 seconds an electrical power of 1 to 5 MW at its peak.

The power distribution unit may be coupled to the electrical network of the aircraft. It may also be coupled to a secondary power source.

The electrical energy unit may be formed as an alternative energy source. The electrical energy unit may comprise an electrical energy storage.

The electrical assistance system may comprise a central control system which interfaces with the aircraft systems and/or a turbomachine control unit and/or the electrical elements or electric machines. In this way an efficient power management and a centralized protection is achieved.

Advantageously, the control system is capable of managing the different elements of the integrated system, including the turbomachine and preferably the overall aircraft electrical network. The electrical network may efficiently transfer the electrical energy.

According to an aspect, the invention provides a method of operating a turbomachine of an aircraft, wherein the aircraft comprises an electrical machine unit which is coupled to a shaft of a compressor unit, the aircraft being operated in different operation modes comprising: a standby mode, in which an energy flow from the electrical machine is only used to provide power to the aircraft electrical network; an acceleration mode in which energy flows from an energy source and/or a secondary power unit to the electrical machine unit and from there to the shaft of the compressor; a deceleration mode in which energy flows from the decelerated shaft to the electrical machine and from there to the energy storage and/or secondary power source.

Preferably, the method may further comprise an operation mode, in which the electrical machine unit acts as a generator and deceleration energy is dissipated e.g. into a load bank.

Advantageously a propulsion system control unit limits the system dynamics to soften a commanded transition to avoid surge when the electrical assistance is not able to inject or absorb the normal power level.

During at least one of the different operation modes the energy may flow from and/or to the shaft via a power distribution unit.

Preferably, an electrical assistance system according to the invention is used in the method of operating the turbomachine.

According to another aspect the invention provides an aircraft comprising an electrical assistance system according to the invention.

This invention leverages new electrical technologies to push further the optimisation of classical turbomachines and more precisely the compressors. The invention increases the stability of compact compressors with increased high pressure ratios, which is a particular advantage for the development of new engines.

The use of the proposed electrical assistance overcomes the difficulty to combine high performance at high power to stability up to low powers. Thus, the proposed electrical assistance strongly supports engine development. By the invention, the efficiency of the compressor belongs to the highest allowed by aerodynamics in steady state operation, while the transient capabilities depend only on the assistance power.

Characteristics and advantages described in relation to the electric assistance system are also related to the method of operating a turbomachine of an aircraft and vice versa.

In the following, exemplary embodiments showing further advantages and characteristics are described in detail with reference to the figures, in which:
- Fig. 1: shows a schematic view of an electrically assisted turbo machine being equipped with the electrical assistance system according to a first embodiment of the invention;
- Fig. 2: shows an example of an electrical network architecture with electric machines integrated in LP (Low Pressure) shafts and HP (High Pressure) shafts;
- Fig. 3: shows a schematic view of an example of a control system architecture in accordance with the invention; and
- Fig. 4: shows a schematic diagram of exemplary operation modes according to the invention with regards to electrical storage energy capacity.

In the figures, similar or identical elements and features are designated by the same reference numbers.

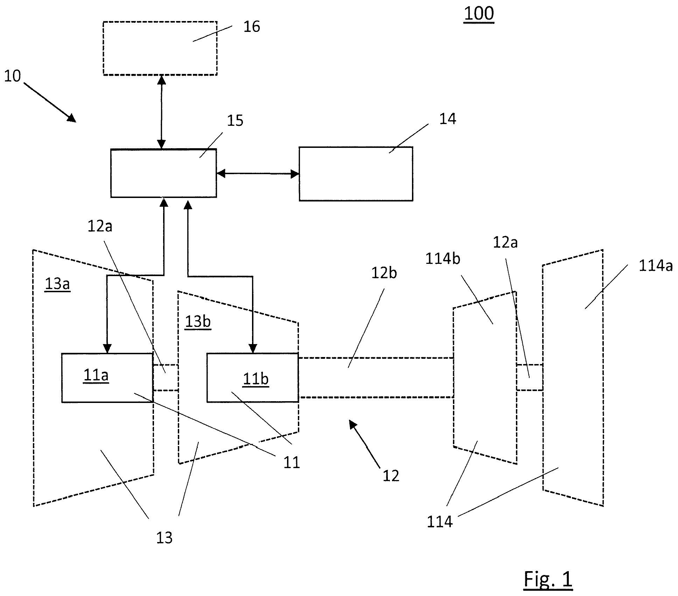

**Figure 1** shows an electrically assisted turbo machine 100 which is equipped with an electrical assistance system 10 according to a first embodiment of the invention. In this figure full lines indicate the elements of the electrical assistance system 10. Dotted lines indicate elements of the turbo machine and the aircraft. In this example of implementation, the turbo machine 100 comprises two mechanically independent shafts: the Low Pressure (LP) shaft 12a is mechanically coupled to a LP compressor 13a and to a LP turbine 114a, the High Pressure (HP) shaft 12b is mechanically coupled to a HP compressor 13b and to a HP turbine 114b. This turbo machine may constitutes a two-shaft turbojet, the core of a two-shaft turboshaft engine or turboprop engine, or the primary flux of a turbofan. In this latter case, the LP shaft would be mechanically connected to a fan, possibly by the intermediate of a gear box.

The assistance system 10 comprises an electrical machine unit 11 for providing and/or receiving mechanical power to/from the shafts 12a and 12b. The electrical machine unit 11 comprises two electrical machines 11a, 11b which are respectively mechanically coupled to shafts 12a and 12b.

An electrical energy unit 14 serves to provide and also to receive and store electrical energy. The electrical energy unit 14 comprises e.g. an alternative energy source and/or a secondary power source.

A power distribution unit 15 which is electrically coupled to the electrical energy unit 14 distributes flows of electrical power between the electrical energy unit 14 and the electrical machine unit 11 comprising the electrical machines 11a, 11b. The power distribution unit 15 is adapted to maintain each compressor 13a and 13b on a stable operating line during the different transient phases by controlling independently the flows of electrical power to and from the electrical machines 11a and 11b.

In addition, the power distribution unit 15 is electrically coupled to the electrical network 16 of the aircraft. It also controls and distributes flows of electrical power between the aircraft electrical network 16 and the electrical machine unit 11, and/or between the aircraft electrical network 16 and the electrical energy unit 14,

One electrical machine 11a is integrated in the low-pressure compressor 13a of a compressor unit 13, whereas the other electrical machine 11b is integrated in the high-pressure compressor 13b of the compressor unit 13.

Both electrical machines 11a, 11b of the electrical machine unit 11 are electrically coupled to the power distribution unit 15 whereby electrical power can be transmitted between the electrical machines 11a, 11b and the power distribution unit 15. The transmission of electrical energy comprises a flow of electrical power. The electrical power can flow in two directions, i.e. from the electrical machines 11a, 11b to the power distribution unit 15 and/or from the power distribution unit 15 to the electrical machines 11a, 11b.

The power distribution unit 15 is electrically coupled to the electrical energy unit 14 in order to exchange electrical energy or a flow of electrical power with the electrical energy unit 14. The flow of power goes in two directions, i. e. from the power distribution unit 15 to the electrical energy unit 14 and/or from the electrical energy unit 14 to the power distribution unit 15.

Similarly, the power distribution unit 15 is electrically coupled to the aircraft electrical network 16 in order to exchange electrical energy, i.e. a flow of electrical power. The flow of power goes as well in two directions, i.e. from the power distribution unit 15 to the aircraft electrical network 16 and/or from the aircraft electrical network 16 to the power distribution unit 15.

The compressors 13a, 13b are taking benefit of transient assistance and may have a relatively high peak efficiency despite a relatively narrow stable range.

Both electrical machines 11a, 11b of the assistance system 10 are integrated in the turbo machine 100.

The first electrical machine 11a is installed in the low-pressure stage 13a of compressor unit 13. It is mechanically coupled to the low-pressure shaft 12a of the low-pressure compressor 13a in order to generate electrical power from the rotational energy of the low-pressure shaft 12a, or in order to supply mechanical power to the low-pressure shaft 12a.

The second electrical machine 11b is installed in the high-pressure stage 13b of compressor unit 13. It is mechanically coupled to the high-pressure shaft 12b of the high-pressure compressor 13b in order to generate electrical power from the rotational energy of the high-pressure shaft 12b, or in order to supply mechanical power to the high-pressure shaft 12b.

The electrical machine unit 11 is integrated in the shaft or shaft device 12 formed by shafts 12a, 12b. The first electrical machine 11a is integrated in the low-pressure shaft 12a of shaft device 12, and the second electrical machine 11b is integrated in the high-pressure shaft 12b of shaft device 12. In other embodiments, the electrical machine unit 11 is attached to the shaft or shaft device 12.

Both electrical machines 11a, 11b of the electrical machine unit 11 receive electrical power from the power distribution unit 15 and transform the electrical power into mechanical power which acts on its coupled shaft of the shaft device 12. Further, the electrical machines 11a, 11b receive mechanical energy from its assigned shafts 12a, 12b and transform this energy into electrical energy or power, which is then supplied via power distribution unit 15 to the electrical energy unit 14 and/or to the aircraft electrical network 16.

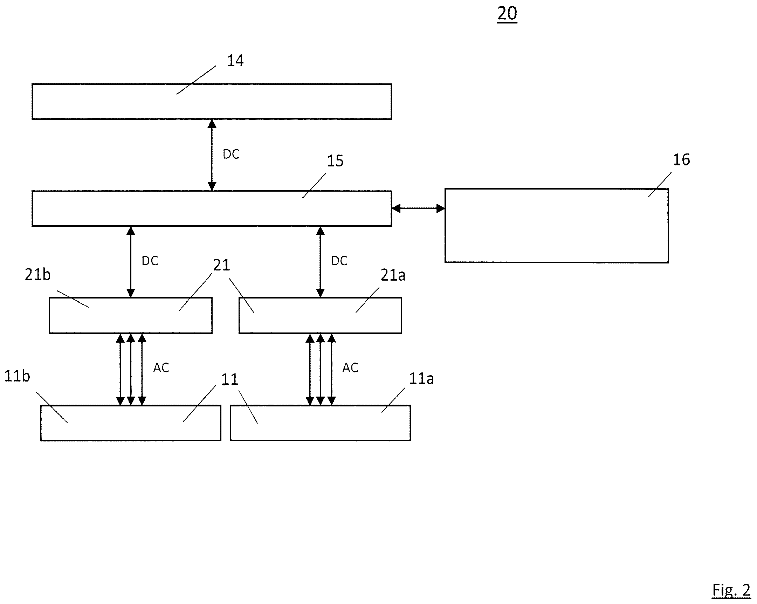

**Fig. 2** shows an electrical network architecture 20 as a preferred embodiment in accordance with the invention. It forms a star configuration, where the power distribution unit 15 is arranged in its centre and forms a DC power distribution centre. The DC power distribution centre 15 allows the flow of electrical power to and from each of the network components. The network components comprise in particular electrical machines 11a, 11b as described above, an electrical energy storage which is e. g. formed by electrical energy unit 14 as described above, the aircraft electrical network 16 and/or a secondary power source.

The DC power distribution centre 15 is electrically coupled to electrical energy storage 14, the aircraft electrical network 16 and/or a secondary power source, as well as to an inverter unit 21 comprising a first inverter 21a assigned to the low-pressure shaft 12a and a second inverter 21b assigned to the high-pressure shaft 12b. Both inverters 21a, 21b are electrically coupled to the DC power distribution centre 15. Between the DC power distribution centre 15 and the electrical energy storage 14 as well as between the DC power distribution centre 15 and both inverters 21a, 21b, a flow of DC electrical power is exchanged.

The inverter unit 14 is electrically coupled to the electrical machine unit 11 and transforms DC electrical power to AC electrical power and vice versa. Each of the inverters 21a, 21b is coupled to its assigned electrical machine 11a, 11b respectively.

First inverter 21a is electrically coupled to the first electrical machine 11a arranged at and mechanically coupled to low-pressure shaft 12a (see Fig. 1). Second inverter 21b is electrically coupled to the second electrical machine 11b arranged at and mechanically coupled to the high-pressure shaft 12b. Between the inverter shafts 21a, 21b and the electrical machines 11a, 11b, flows of aircraft electrical power are transmitted.

In the preferred embodiment, the electrical machines 11a, 11b are integrated in the low-pressure and high-pressure shafts 12a, 12b.

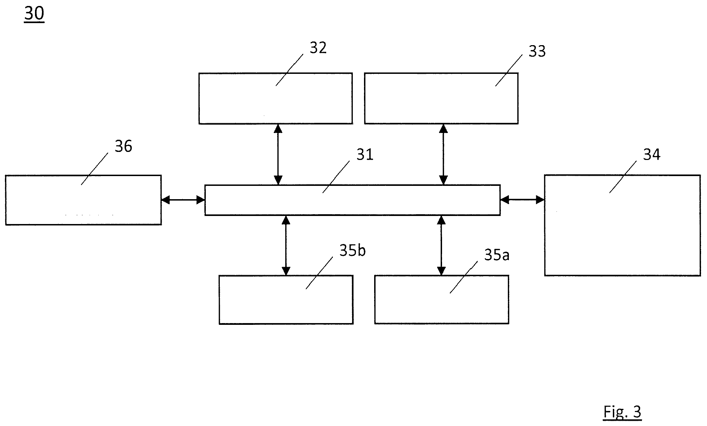

**Fig. 3** shows a schematic view of a preferred embodiment of a control system architecture 30 in accordance with the invention. The control architecture 30 is part of the electrical energy assistance system 10 and comprises a central control system 31 provided by or comprising a propulsion system controller. It interfaces with the aircraft systems, the turbo machine control and the electrical elements, and thus allows an efficient power management and a centralized protection.

The central control system or propulsion system controller 31 is electrically coupled to an electrical energy storage control 32 which controls e. g. the electrical energy storage 14 as described above (see Figs. 1 and 2). The propulsion system controller 31 further is electrically coupled to a turbo machine control 33 of the aircraft which controls the turbomachines of the aircraft. Further, the propulsion system controller 31, is electrically coupled to the aircraft electrical network or secondary power source control 34, a low-pressure electrical machine control 35a for controlling e. g. the low-pressure electrical machine 12a as described above, a high-pressure machine control 35b for controlling e. g. the high-pressure electrical machine 12b as described above, and to an aircraft thrust control and indications unit 36 which controls the thrust and indicates the status.

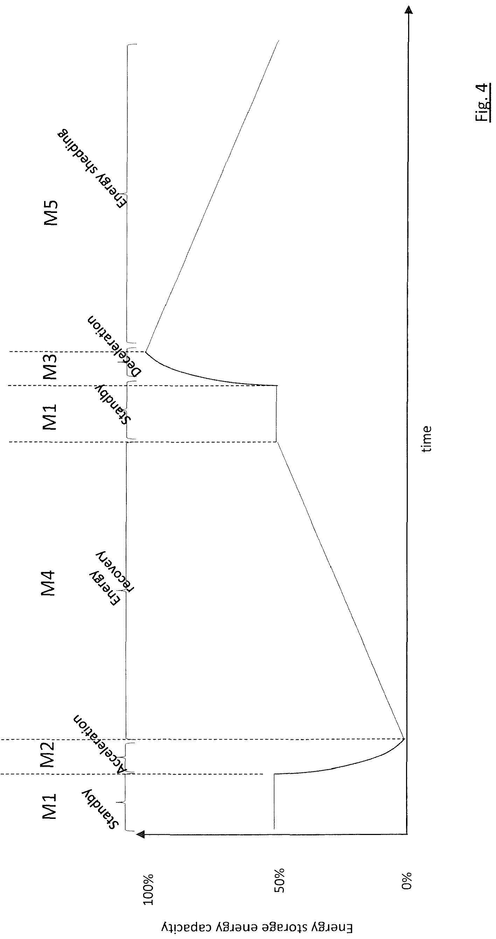

In the following, with reference to figures 1 and 4, a preferred example of a method of operating a turbo machine of an aircraft in accordance with the invention is described.

**Fig. 4** shows a schematic diagram of exemplary operation modes with regards to electrical storage energy capacity.

During a standby mode M1, an energy flow from the electrical machines 11a, 11b is only used to provide a required power to the aircraft electrical network 16 via the power distribution centre 15. In this mode, no transient requires use of the electrical energy storage 14. The energy capacity of the storage system or the electrical energy storage 14 is kept at an optimum nominal value, e. g. around 50%.

During an acceleration mode M2, the energy flow goes from the electrical energy storage 14 and/or from a secondary power source 16 to one or both of the electrical machines 11a, 11b and to its associated shaft or shafts 12a, 12b via the power distribution centre 15. In this mode, the transient requires energy from the electrical energy storage.

During a deceleration mode M3, the energy flow goes from one or both of the decelerated shafts 12a, 12b to its associated electrical machine 11a, 11b and to the energy storage system 14, 16 via the power distribution centre 15.

During an energy recovery mode M4, the electrical storage system 14 recovers in order to move back to the standby mode M1. The energy flow goes from one or both of the decelerated shafts 12a, 12b to its associated electrical machine 11a, 11b and to the energy storage system 14, 16 via the power distribution centre 15.

During an energy shedding mode M5, the electrical energy storage system 14 sheds energy to move back to the standby mode M1.

A buffering of electrical needs from the aircraft network is for the electrical energy storage 14 akin to the acceleration and deceleration modes M1, M2, albeit at less power.

For abnormal operation, e. g. in case of degraded modes which may be caused by a faulty energy storage or electrical machine/network issues, etc., the electrical machine unit 11 and each of its electrical machines 11a, 11b can act as a generator. Consequently, deceleration energy is dissipated for example into a load bank.

If the electrical machine or machines 11a, 11b cannot act as a generator, the propulsion system controller 31 limits the system dynamics to soften the commanded transition in order to avoid surge.

It is noted that the described modes can be independent for each electrical machine 11a, 11b, and thus for acceleration and deceleration on each shaft 12a, 12b. The aircraft electrical network 16 and the electrical storage 14 will ultimately buffer the net effect. This configuration and capability to independently control each element allows balancing of the system and a potential optimization of the system.

The invention described herein can advantageously be combined with other technologies to provide synergies and increase the efficiency. Examples of such technologies providing potential synergies are a new structural electrical energy storage concepts, a novel energy polymer capacitor, high density electrical machine concepts with integrated cooling from E-flow, a new power offtake energy management, and the secondary power unit described in WO 2018/060531 A1.

The invention provides in particular the following advantages:
The thermodynamic performance of a turbomachine is increased without sacrificing operability. In particular, turbofan engines meet operability issues at idles when fan pressure ratio is reduced, bypass ratio and overall pressure ratio are increased. In this case the electrical assistance is an enabler for ultrahigh bypass ratio engines combining all these improvements. This causes a decrease of the fuel consumption and therefore of the CO2, NOx and other pollutants emissions.

The turbomachine is simplified. This causes reducing weight, cost, complexity and maintenance burden.

Fast accelerations are allowed which could not be reached by classical gas turbines. This causes open design space for aircraft design, including simplification of aero-controls and associated structures, and a decrease of fuel consumption as well as a reduction of cost and maintenance burden reduction.

A replacement of stand-alone engine pneumatic or electrical starters or starter-generators is possible, as the function can be also accomplished by this new feature. This causes reducing weight, cost, complexity and maintenance burden

The replacement of existing legacy AGB driven AC generators is possible, as the function can be also accomplished by this new feature when the e-machines are not used as motors. This causes reducing weight, cost, complexity and maintenance burden.

It is possible to ease the integration of the claimed function within a new electrical aircraft with a HVDC distribution network and to replace dedicated energy storages (e.g. LV/HV batteries), used to supply aircraft electrical network when main/auxiliary power sources are off, i.e. when low energy or power is needed.

The invention comprises the implementation of an electrical transient assistance allowing to design a gas turbine engine, including turbofan, turboprop and turboshaft, with increased performances. This causes a reduction in fuel consumption, better acceleration/deceleration capabilities and minimum idle, as well as reduced overall total costs of operation.

### List of reference numbers:

- 10: electrical assistance system
- 11: electrical machine unit
- 11a, 11b: electrical machines
- 12: shaft device
- 12a: low-pressure shaft
- 12b: high-pressure shaft
- 13: compressor unit
- 13a: low-pressure compressor
- 13b: high-pressure compressor
- 14: electrical energy unit / storage
- 15: power distribution unit
- 16: aircraft electrical network
- 20: electrical network architecture
- 21: inverter unit
- 21a: first inverter
- 21b: second inverter
- 30: control architecture
- 31: central control system / propulsion system controller
- 32: energy storage control
- 33: turbo machine control
- 34: aircraft electrical network control / secondary power source control
- 35a: low-pressure electrical machine control
- 35b: high-pressure machine control
- 36: aircraft thrust control and indications unit
- 100: turbo machine
- 114a: low-pressure turbine
- 114b: high-pressure turbine

## Claims

1. Electrical assistance system for a turbomachine (100) of an aircraft, comprising
an electrical machine unit (11) for providing and receiving mechanical power to and/or from a shaft (12a, 12b) of a compressor unit (13) of an aircraft,
an electrical energy unit (14) for providing and receiving electrical energy, and a power distribution unit (15) for distributing flows of electrical power to the electrical energy unit (14) and to the electrical machine unit (11), wherein the power distribution unit (15) is adapted to maintain the compressor unit (13) on a stable operating line during operation by controlling the flow of power to and from the electrical machine unit (11) coupled to the shaft (12a, 12b) of the compressor unit.

2. Electrical assistance system according to claim 1, **characterized in that** it is adapted for transient optimization during the operation of the turbomachine (100), wherein the electrical energy unit (14) supports and buffers the transients of the turbomachine (100).

3. Electrical assistance system according to claim 1 or 2, **characterized in that** the electrical machine unit (11) comprises at least two electrical machines (11a, 11b) and the compressor unit (13) comprises at least two compressors (13a, 13b), wherein each electrical machine (11a, 11b) is coupled to at least one of the compressors (13a, 13b).

4. Electrical assistance system according to claim 1 or 2, **characterized in that** the electrical machine unit (11) is designed
4.1. to exert independent angular moments on the compressor shafts (12a, 12b) compensating a desired acceleration by receiving power from the electric energy unit (14) or compensating a desired deceleration by absorbing power into the electric energy unit (14), and/or
4.2. to produce driving and/or a resisting angular moments as required to maintain the operation of the compressor unit (13) and/or different compressors (13a, 13b) on a steady operating line, and/or
4.3. to be installed for supporting different compressor stages of the compressor unit (13).

5. Electrical assistance system according one of the preceding claims, **characterized in that** the electrical machine unit (11) is adapted to be integrated in one or more shafts (12a, 12b) of the compressor unit (13) and/or in an accessory gearbox.

6. Electrical assistance system according one of the preceding claims, characterized that the electrical machine unit (11) comprises one or more integrated power electronic converters (21a, 21b) and/or associated controllers.

7. Electrical assistance system according one of the preceding claims, characterized that the electrical energy unit (14) is adapted to provide and/or absorb during each transient phase an electrical power of less than 5 MW at its peak.

8. Electrical assistance system according one of the preceding claims, characterized that
8.1. the power distribution unit (15) is coupled to the electrical network of the aircraft, and/or
8.2. the electrical energy unit (14) comprises or is formed as an alternative energy source, and/or
8.3. the electrical energy unit (14) comprises an electrical energy storage, and/or
8.4. the power distribution unit (15) is coupled to a secondary power source.

9. Electrical assistance system according one of the preceding claims, **characterized in that** the electric machine unit (11) is coupled to a control system (31) interfacing with
9.1. the aircraft systems, and/or
9.2. a turbomachine control unit (33), and/or
9.3. an electrical energy storage control unit, and/or
9.4. a thrust control unit (37), and/or
9.5. the electrical network of the aircraft, and/or
9.6. a secondary power source control unit (34).

10. Method of operating a turbomachine of an aircraft, wherein the aircraft comprises an electrical machine unit (11) which is coupled to a shaft (12a, 12b) of a compressor unit (13), the aircraft being operated in different operation modes comprising
- a standby mode (M1), in which an energy flow from the electrical machine unit (11) is only used to provide power to the aircraft electrical network;
- an acceleration mode (M2) in which energy flows from an electrical energy storage (14) and/or a secondary power source (16) to the electrical machine unit (11) and from there to the shaft (12a, 12b) of the compressor unit (13);
- a deceleration mode (M3) in which energy flows from a decelerated shaft (12a, 12b) to the electrical machine unit (11) and from there to the electrical energy storage (14) and/or secondary power source (16).

11. Method according to claim 10, further comprising an operation mode, in which the electrical machine unit (11) acts as a generator and deceleration energy is dissipated into a load bank.

12. Method according to claim 10 or 11, wherein a propulsion system control unit (31) limits the system dynamics to soften a commanded transition to avoid surge.

13. Method according to one of claims 10 to 12, wherein during at least one of the different operation modes the energy flows from and/or to the shaft (12a, 12b) via a power distribution unit (15).

14. Method according to one of claims 10 to 13, wherein an electrical assistance system according to one of claims 1 to 9 is used.

15. Aircraft, comprising an electrical assistance system according to one of claims 1 to 9.
